**Europäisches Patentamt**

**European Patent Office**

**Office européen des brevets**

(19)

(11) Veröffentlichungsnummer: **0 169 522 B1**

(12)

# EUROPÄISCHE PATENTSCHRIFT

(45) Veröffentlichungstag der Patentschrift:
**27.09.89**

(51) Int. Cl.⁴: **G 11 B 5/704, C 08 F 299/02**

(21) Anmeldenummer: **85109121.5**

(22) Anmeldetag: **22.07.85**

(54) Verfahren zur Herstellung magnetischer Aufzeichnungsträger.

(30) Priorität: **27.07.84 DE 3427683**

(43) Veröffentlichungstag der Anmeldung:
**29.01.86 Patentblatt 86/5**

(45) Bekanntmachung des Hinweises auf die Patenterteilung:
**27.09.89 Patentblatt 89/39**

(84) Benannte Vertragsstaaten:
**DE FR GB NL**

(56) Entgegenhaltungen:
**EP-A- 0 012 339**
**GB-A- 2 116 075**
**US-A- 4 468 436**

(73) Patentinhaber: **BASF Aktiengesellschaft,
Carl-Bosch-Strasse 38, D-6700 Ludwigshafen (DE)**

(72) Erfinder: **Balz, Werner, Dr., Kropsburgstrasse 44,
D-6703 Limburgerhof (DE)**
Erfinder: **Kovacs, Jenoe, Dr., Kantstrasse 9,
D-6717 Hessheim (DE)**
Erfinder: **Lechner, Hilmar, Bensheimer Ring 4 a,
D-6710 Frankenthal (DE)**
Erfinder: **Schaefer, Dieter, Dr., Hauptstrasse 173,
D-6731 Lindenberg (DE)**
Erfinder: **Buethe, Ingolf, Dr., Am Wasserturm 1,
D-6737 Boehl-Iggelheim (DE)**

## Beschreibung

Die Erfindung betrifft ein Verfahren zur Herstellung schichtförmiger magnetischer Aufzeichnungsträger durch Auftragen einer Dispersion eines magnetisch anisotropen Materials in einer Bindemittellösung auf ein mit einer haftvermittelnden Schicht versehenes flexibles Kunststoffträgermaterial und anschliessendes Verfestigen der Magnetschicht, wobei die haftvermittelnde Schicht aus einer strahlungshärtbaren wässrigen Dispersion eines Polymeren aufgebaut ist.

Die Verwendung einer haftvermittelnden Schicht zwischen dem flexiblen Kunststoffträgermaterial und der Magnetschicht ist seit langem bekannt. So beschreibt bereits die DE-AS 1 282 698 eine Haftschicht, die aus einem Mischpoly-(vinylidenchlorid-acrylnitril) besteht, das zu 81 bis 98% aus Vinylidenchloridgruppen aufgebaut ist. Diese und ähnliche andere haftvermittelnde Zwischenschichten werden als Lösung in einem organischen Lösungsmittel auf das Trägermaterial aufgetragen und durch Verdampfen des Lösungsmittels verfestigt.

Die Herstellung einer haftvermittelnden Zwischenschicht mittels einer wässrigen Emulsion ist aus der FR-PS 1 396 490 bekannt. Hierbei wird ein Terpolymeres aus 35 bis 94% Vinylidenchlorid, 3,5 bis 40% Acrylester oder Acrylnitril und 0 bis 25% Itaconsäure oder Acrylsäure eingesetzt. In ähnlicher Weise wird gemäss der US-PS 4 468 436 vorgegangen. Danach erfolgt die Vernetzung des die Zwischenschicht bildenden mittels Elektronenstrahlen vernetzbaren doppelbindungshaltigen Polymers erst nach dem Auftragen und der Oberflächenbehandlung der Magnetschicht. Nachteilig an den vorgenannten Verfahren ist jedoch, dass sie zu Haftschichten führen, die nicht genügend lösungsmittelbeständig sind. Gerade bei den üblicherweise extrem dünnen haftvermittelnden Zwischenschichten, welche die Magnetschicht auf der Trägerfolie fixieren sollen, ist wegen der erforderlichen Einheitlichkeit und Homogenität der mechanischen Magnetschichteigenschaften eine nicht ausreichend lösungsmittelbeständige Haftschicht störend. Daneben ist bei den meisten Verfahren zur Herstellung dieser Zwischenschichten wegen des für die geringen Schichtstärken hohen Lösungsmittelanteils der Anfall grosser Mengen organischer Lösungsmittel problematisch.

Aufgabe der Erfindung war es daher, ein Verfahren zur Herstellung von schichtförmigen magnetischen Aufzeichnungsträgern bereitzustellen, mit dem es möglich ist, die vorgenannten Nachteile zu beheben und insbesondere eine haftvermittelnde Zwischenschicht herzustellen, welche die erforderliche geringe Schichtdicke bei hoher Gleichmässigkeit der Schicht aufweist, mechanisch stabil und in organischen Lösungsmitteln vollkommen unlöslich ist und die Haftfestigkeit der Magnetschicht auf dem Trägermaterial deutlich verbessert.

Es wurde nun gefunden, dass sich schichtförmige magnetische Aufzeichnungsträger durch Auftragen einer Zwischenschicht aus einem strahlenvernetzbaren wässrigen Polymeren auf ein flexibles Kunststoffträgermaterial, Trocknen der Zwischenschicht und anschliessendes Aufbringen einer Dispersion eines magnetisch anisotropen Materials in einer Bindemittellösung und Verfestigen der Magnetschicht gemäss der gestellten Aufgabe herstellen lassen, wenn die strahlungshärtbare wässrige Dispersion für die haftvermittelnde Zwischenschicht aus

(A) 20 bis 80 Gew.-% Wasser,

(B) 80 bis 20 Gew.-% mindestens eines in (A) dispergierten Präpolymeren mit einem Gehalt von 0,01 bis 1,0 Mol pro 100 g Präpolymer an polymerisierbaren C-C-Doppelbindungen, einem mittleren Molekulargewicht von mindestens 350 sowie einer Viskosität bei 23°C von mindestens 600 cP,

mit der Massgabe, dass die Summe der unter (A) und (B) genannten Prozentzahlen gleich 100 ist, sowie zusätzlich

(C) 0,1 bis 10 Gew.-%, bezogen auf (B), eines Polyvinylalkohols mit einem Restacetatgehalt von weniger als 35 Mol-% und/oder einem Vinylpyrrolidon-Vinylester-Copolymeren mit einem Vinylestergehalt von weniger als 35 Gew.-% und

(D) 0,5 bis 10 Gew.-%, bezogen auf die Summe (A) und (B) mindestens eines Photoinitiators

besteht und nach dem Trocknen der Schicht mit UV-Licht vernetzt wird.

Bevorzugt sind polymerisierbare C-C-Doppelbindungen enthaltende Polyester mit einer Säurezahl von höchstens 10, polymerisierbare C-C-Doppelbindungen enthaltende Polyether, hydroxylgruppenhaltige Umsetzungsprodukte aus einem mindestens zwei Epoxidgruppen pro Molekül enthaltenden Polyepoxid mit mindestens einer α,β-ethylenisch ungesättigten Carbonsäure, Polyurethan(meth)-acrylate sowie α,β-ethylenisch ungesättigte Acylreste enthaltende Acrylcopolymere.

Die Herstellung dieser strahlungshärtbaren wässrigen Bindemitteldispersionen ist an sich bekannt (DE-OS 2 853 921). Danach werden organische Lösungen der obengenannten Präpolymeren mit wässrigen Lösungen von Polyvinylalkoholen mit einem Restacetatgehalt von wengier als 35 Mol-% und/oder ein Vinylpyrrolidon-Vinylester-Copolymeres mit einem Vinylestergehalt von weniger als 35 Gew.-% gemischt und das inerte organische Lösungsmittel oder Lösungsmittelgemisch destillativ entfernt.

Geeignete Präpolymere sind z. B.

1. Ein Polyester mit einer Säurezahl von höchstens 10 aus aliphatischen und/oder aromatischen Dicarbonsäuren, wie Bernsteinsäure, Glutarsäure, Adipinsäure, Pimelinsäure, Korksäure, Azelainsäure, Sebacinsäure, Cyclohexandicarbonsäure, Phthalsäure, Isophthalsäure, Terephthalsäure, Maleinsäure, Fumarsäure, Itakonsäure bzw. deren Derivate, und mehrwertigen Alkoholen, wie Ethylenglykol, Polyethylenglykole, Propylenglykol, Polypropylenglykole, Butandiol, Hexandiol, Neopentylglykol, Hydroxypivalinsäureneopentylglykolester, Trimethylolpropan, Glycerin, Pentaerythrit und/oder Trishydroxyethylisocyanurat, sowie α,β-ethylenisch ungesättigten Monocarbonsäure, beispielsweise Acrylsäure, Methacrylsäure, Crotonsäure, Zimtsäure und/ oder Dicarbonsäurehalbester von Monoalkanolen, wie Malein-, Fumar- und Itakonsäurehalbester mit $C_1$- bis $C_4$-Monoalkoholen, wobei Acrylsäure und Methacrylsäure bevorzugt sind, welcher nach den üblichen Verfahren in einem Schritt oder auch stufenweise hergestellt werden kann,

2. ein aliphatischer oder araliphatischer Polyether, welcher durch Umsetzung von zwei- und/ oder mehrwertigen Alkoholen, die auch unter 1. genannt sind, mit verschiedenen Mengen an Ethylen- und/oder Propylenoxid erhalten wird und dessen freie Hydroxylgruppen ganz oder teilweise mit ethylenisch ungesättigten Alkoholen, beispielsweise Allylalkohol, Methallylalkohol, Cortylalkohol, Zimtalkohol, verethert und/oder mit α,β-ethylenisch ungesättigter Monocarbonsäure, wie unter 1. genannt verestert sind,

3. eine ungesättigte hydroxylgruppenhaltige Verbindung durch Umsetzung eines Polyepoxids mit durchschnittlich mindestens 2 Epoxidgruppen pro Molekül, beispielsweise Polyglycidylether mehrwertiger Alkohole, wie sie auch unter 1. genannt sind, Polyglycidylether mehrwertiger Phenole, wie Bisphenol A, Glycidylester mehrwertiger Carbonsäuren, wie sie auch unter 1. genannt sind, andere Glycidylverbindungen, beispielsweise Triglycidylisocyanurat und/oder epoxidierte natürliche oder synthetische Öle, mit α,β-ethylenisch ungesättigten Carbonsäuren, wie sie auch unter 1. genannt sind, hergestellt werden kann,

4. ein gegebenenfalls Harnstoffgruppen enthaltendes Polyurethan, das aus aliphatischen und/oder aromatischen Polyisocyanaten, beispielsweise Tetramethylendiisocyanat, Hexamethylendiisocyanat, Isophorondiisocyanat, Diphenylmethandiisocyanat, Toluylendiisocyanat, Naphthylendiisocyanat, 4,4′-Diphenyletherdiisocynat, gegebenenfalls daraus hervorgehende Di- oder Trimere sowie deren Umsetzungsprodukte mit untergeordneten Mengen wasserstoffaktiver Verbindungen, wie z. B. mehrwertigen Alkoholen, die auch unter 1. genannt sind, polyfunktionellen Aminen und/oder Aminoalkoholen, durch Umsetzung mit hydroxylgruppenhaltigen (Meth)acrylsäureestern, wie Hydroxypropyl(meth)-acrylat und/oder Butandiolmono(meth)-acrylat, hergestellt werden kann,

5. ein Polymeres, das durch Einführung von α,β-ethylenisch ungesättigten Acylresten, die sich beispielsweise von den unter 1. genannten α,β-ethylenisch ungesättigten Monocarbonsäuren ableiten, in durch gewöhnliche Lösungspolymerisation hergestellte Acrylatcopolymere, Styrol/Acrylat-Copolymere oder dergleichen, mit einem Gehalt von mindestens 0,02 Mol Hydroxyl-, Carboxyl- und/oder Epoxygruppen pro 100 g Substanz, erhalten werden kann.

Desgleichen eignen sich auch Gemische der unter 1. bis 5. genannten Präpolymeren.

Den zur Herstellung der haftvermittelnden Zwischenschicht eingesetzten wässrigen Dispersionen werden polymere Verlaufmittel in Mengen von 1 bis 10, vorzugsweise 2 bis 5 Gewichtsprozent zugesetzt. Dabei handelt es sich vorzugsweise um wasserlösliche hochmolekulare organische Verbindungen mit polaren Gruppen, wie z. B. Polyvinylpyrrolidon, Copolymerisate aus Vinylpropionat bzw. -acetat und Vinylpyrrolidon, teilverseifte Copolymerisate aus Acrylester und Acrylnitril, Polyvinylalkohole mit unterschiedlichem Restacetatgehalt, Celluloseether, Gelatine oder Mischungen dieser Stoffe. Besonders bevorzugte Schutzkolloide sind Polyvinylalkohol mit einem Restacetatgehalt von unter 35, insbesondere 5 bis 30 Mol-% und/oder ein Vinylpyrrolidon-/Vinylpropionat-Copolymeres mit einem Vinylestergehalt von unter 35, insbesondere 5 bis 30 Gew.-%.

Ausserdem können nichtionische, in besonderen Fällen auch ionische Emulgatoren verwendet werden. Bevorzugte Emulgatoren sind längerkettige Alkohole oder Phenole unterschiedlichen Eth- und/oder Propoxylierungsgrades (Addukte von 4 bis 50 Mol Ethylenoxid und/oder Propylenoxid). Besonders vorteilhaft sind Kombinationen der oben genannten Schutzkolloide mit derartigen Emulgatoren, da mit ihnen feinteiligere Dispersionen erhalten werden.

Des weiteren werden den strahlungshärtbaren Dispersionen übliche in Wasser lösliche oder dispergierbare Photoinitiatoren, welche unter Einwirkung von kurzwelligem, insbesondere ultraviolettem Licht die Polymerisation auslösen, zugesetzt. Als solche eignen sich i. a. Benzoin und dessen Derivate, wie Benzoinmethylether, Benzoinethylether, Ketone, wie Acetophenon, Benzophenon, Michler's Keton, Diketone, wie Benzil. Besonders bewährt hat sich das Dimethylhydroxyacetophenon. Die Photoinitiatoren werden in einer Menge von 0,1 bis 20, vorzugsweise 0,5 bis 10 Gew.-%, bezogen auf den photopolymerisierbaren Haftvermittler verwendet. Um die Polymerisation schneller ablaufen zu lassen, werden Beschleuniger mitverwendet. Es sind überwiegend tertiäre Amine wie beispielsweise Triethanolamine und ähnliche.

Als Strahlungsquellen für das die Polymerisation auslösende Licht verwendet man zweckmässigerweise solche, die Licht einer Wellenlänge zwischen 2000 und 8000 Å ausstrahlen oder einen ausreichenden Anteil von Licht dieses Wellenlängenbereichs aufweisen, wie z. B. Quecksilberniederdruck- oder Hochdrucklampen. Bei den Arbeiten über Luft haben sich Quecksilber-Hochdrucklampen am besten bewährt.

Die Auftragung der für die haftvermittelnden Zwischenschicht vorgesehenen wässrigen Dispersionen erfolgt in den für die Magnetbeschichtung üblichen Maschinen. Man kann zum Auftragen die üblichen Rasterwalzen oder Giesslineale verwenden und kann die Konzentration der Dispersion zwischen 5 bis 30%, vorzugsweise 10 bis 20% variieren. Daraus resultieren die haftvermit-

telnden Schichtdicken von etwa 0,2 bis 5 µm, vorzugsweise 0,5 bis 1 µm.

Nachdem die haftvermittelnde Zwischenschicht auf das übliche Trägermaterial, insbesondere Folien aus linearen Polyestern, wie Polyethylenterephthalat, aufgetragen und gehärtet ist, erfolgt die weitere Herstellung des magnetischen Aufzeichnungsträgers in allgemein üblicher Weise.

Die Zusammensetzung und Herstellung der Dispersion der magnetischen Materialien im gelösten oder dispersen Polymerbindemittel entspricht den an sich üblichen Verfahren.

Als Bindemittel für die Dispersion des feinteiligen magnetischen Materials können die für die Herstellung von Magnetschichten bekannten Bindemittel verwendet werden, wie ein in üblichen Lösungsmitteln lösliches Copolyamid, eine Polyvinylformal, ein Polyurethanelastomeres, Mischungen von Polyisocyanaten und höhermolekularen Polyhydroxylverbindungen oder Vinylchloridpolymerisate mit über 60% an Vinylchlorid-Molekülbausteinen, z. B. ein Vinylchloridcopolymerisat mit einem oder mehreren Comonomeren, wie ein Vinylester einer Monocarbonsäure mit 2 bis 9 C-Atomen, oder ein Ester eines aliphatischen Alkohols mit 1 bis 9 C-Atomen und einer ethylenisch ungesättigten Carbonsäure mit 3 bis 5 C-Atomen, wie die Ester der Acrylsäure, Methacrylsäure oder Maleinsäure, oder ein Copolymer des Vinylchlorids mit einer oder mehreren dieser Carbonsäuren selbst als Comonomeren oder hydroxylgruppenhaltige Vinlychloridcopolymerisate, die durch partielle Verseifung von Vinylchlorid-Vinylester-Copolymerisaten oder direkte Copolymerisation von Vinylchlorid mit hydroxylgruppenhaltigen Monomeren, wie Allylalkohol oder 4-Hydroxybutyl- oder 2-Hydroxyethyl-(meth)-acrylat hergestellt werden können.

Eine gegebenenfalls, je nach Bindemittelsystem und Bandeigenschaftsprofil, erforderliche Vernetzung der magnetischen Aufzeichnungsschicht ist durch Umsetzung der Polyurethane oder Polyurethanbindemittelgemische mit Polyisocyanaten möglich. Für die Vernetzung kann eine Vielzahl organischer Di-, Tri- oder Polyisocyanate oder Isocyanatprepolymere bis zu einem Molgewicht von 10000, vorzugsweise zwischen 500 und 3000, verwendet werden. Bevorzugt sind Polyisocyanate, die mehr als 2 NCO-Gruppen pro Molekül tragen. Als besonders geeignet haben sich Polyisocyanate auf Basis von Toluylendiisocyanat, Hexamethylendiisocyanat oder Isophorondiisocyanat, die durch Polyaddition an Di- oder Triole oder durch Biuret- und Isocyanuratbildung entstehen, erwiesen. Besonders günstig ist ein Additionsprodukt von Toluylendiisocyanat an Trimethylolpropan und Diethylenglykol. Die Polyisocyanatmenge kann dabei je nach Bindemittelsystem sehr unterschiedlich sein.

Als Lösungsmittel werden je nach Bindemitteltyp Wasser, cyclische Ether, wie Tetrahydrofuran und Dioxan, und cyclische Ketone, wie Cyclohexanon, verwendet. Selbstverständlich können bei Anwendung von Polyurethanen diese auch in anderen stark polaren Lösungsmitteln, wie Dimethylformamid, N-Methylpyrrolidon, Dimethylsulfoxid oder Ethylenglykolacetat gelöst werden. Ebenso ist es möglich, die genannten Lösungsmittel mit Aromaten, wie Toluol oder Xylol und Estern, wie Ethyl- oder Butylacetat, zu mischen.

Als magnetische Materialien werden bevorzugt feinteiliges stäbchenförmiges Gamma-Eisen(III)oxid mit einer durchschnittlichen Teilchengrösse von 0,1 bis 2 µm und insbesondere von 0,1 bis 0,9 µm oder stäbchenförmiges Chromdioxid der gleichen Teilchenstruktur, wie beim Eisenoxid angegeben, verwendet. Weitere geeignete Materialien sind Gamma-Eisen(III)oxid mit Dotierungen von Schwermetallen, insbesondere von Kobalt sowie feinteilige Metallegierungen von Eisen, Kobalt und/oder Nickel.

Den Dispersionen können weitere Zusatzstoffe zur Verbesserung der Magnetschicht zugesetzt werden. Beispiele solcher Zusätze sind Fettsäuren, Polycarbonsäuren, Mono-, Di- oder Polysulfonsäuren bzw. Phosphorsäuren, deren Gemische, Ester oder Salze mit Metallen der ersten bis vierten Gruppe im Periodensystem, sowie Wachse, Lecithine, Siliconöle, Fluorcarbone, ausserdem Füllstoffe wie Russ, Graphit, Quarzmehl und/oder nicht magnetisierbares Pulver auf Silicatbasis. Im allgemeinen liegen solche Zusätze insgesamt unter 10 Gewichtsprozent, bezogen auf die Magnetschicht.

Die Herstellung der Magnetschicht erfolgt in bekannter Weise. Hierzu wird das magnetische Material mit dem verwendeten Bindemittel und ausreichend Lösungsmittel in einer Dispergiermaschine, z. B. einer Topfkugelmühle oder einer Rührwerkskugelmühle, unter Zusatz von Dispergierhilfsmitteln und gegebenenfalls weiteren Zusatzstoffen dispergiert. Zur Einstellung des zweckmässigen Bindemittel-Pigment-Verhältnisses können diese der Mischung entweder in festem Zustand oder in Form von 10 bis 60%igen Lösungen bzw. 30 bis 60%igen Dispersionen zugegeben werden. Es hat sich als zweckmässig erwiesen, die Dispergierung solange fortzuführen, bis eine extrem feine Verteilung des magnetischen Materials erreicht ist, was 1 bis 5 Tage erfordern kann. Durch anschliessendes wiederholtes Filtrieren erhält man eine völlig homogene Magnetdispersion. Gegebenenfalls erforderliche Vernetzungsmittel werden vor der Beschichtung zur Dispersion gegeben.

Die Magnetdispersion wird nun mit Hilfe üblicher Beschichtungsmaschinen, z.B. mittels eines Linealgiessers, auf den nichtmagnetisierbaren Träger aufgetragen. Als nichtmagnetische und nichtmagnetisierbare Träger lassen sich die üblichen Trägermaterialien verwenden, insbesondere Folien aus linearen Polyestern, wie Polyethylenterephthalat, im allgemeinen in Stärken von 4 bis 200 µm und insbesondere von 6 bis 75 µm. Bevor die noch flüssige Beschichtungsmischung auf dem Träger getrocknet wird, was zweckmässigerweise bei Temperaturen von 50 bis 90°C während 2 bis 5 Minuten geschieht, werden die anisotropen Magnetteilchen durch die Einwirkung eines Magnetfeldes entlang der vorgesehenen Aufzeichnungsrichtung orientiert. Anschliessend können die Magnetschichten auf üblichen Maschinen durch Hindurchführen zwischen geheizten und polierten Walzen, gegebenenfalls bei Anwendung von Druck, bei Temperaturen von 50 bis 100°C, vorzugsweise 60 bis 80°C, geglättet und verdichtet werden. Die Dicke der Magnetschicht beträgt im allgemeinen 3 bis 20 μm, vorzugsweise 4 bis 15 μm.

Die erfindungsgemäss hergestellten magnetischen Aufzeichnungsträger mit der vorteilhaft ausgebildeten haftvermittelnden Zwischenschicht zeichnen sich durch eine deutliche Verbesserung der Haftfestigkeit der Magnetschicht auf dem Trägermaterial gegenüber solchen nach dem Stand der Technik aus. Durch die strahlungsvernetzten Haftschichten wird die zuvor übliche nachteilige Lösungsmittelempfindlichkeit beseitigt. Die Zwischenschichten sind ausserdem mechanisch sehr stabil, vor allem kratzfest. Mit dem erfindungsgemässen Verfahren ergeben sich auch deutliche Verbesserung hinsichtlich der Homogenität der Magnetschicht vor allem durch weniger Beschichtungsstörungen als auch hinsichtlich der mechanischen Schichteigenschaften, insbesondere der Verbesserung der Langlauf- und Klimafestigkeit.

Das erfindungsgemässe Verfahren sei anhand folgender Beispiele näher erläutert und seine Vorteile durch Vergleichsversuche dargestellt.

Beispiel 1

400 Teile einer wässrigen, 40%igen Polyacrylatdispersion auf Basis Phthalsäure, Adipinsäure, Glykol, Trimethylolpropan und Acrylsäure und mit einer OH-Zahl von 320, wobei 85% der OH-Gruppen mit Acrylsäure umgesetzt worden sind, wurde mit 2800 Teilen Wasser unter Rühren verdünnt. Anschliessend wurden 9,6 Teile eines Gemisches aus einem ethoxylierten Phosphorsäureester und dem Alkylamid der Sulfobernsteinsäure, 16 Teile einer 30%igen Vinylpyrrolidon-Vinylpropionat-Lösung, 9,6 Teile Triethanolamin und 9,6 Teile Dimethylhydroxyacetophenon unter Einsatz eines Schnellrührers zugefügt. Nach 10 Minuten wurde die Dispersion filtriert und mit einer Rasterwalze auf eine 15 μm dicke Polyethylenterephthalatfolie aufgetragen. Mittels eines 65°C heissen Luftstroms wurde anschliessend das Wasser verdunstet und die trockene Schicht durch UV-Strahler (2,4 kW) vernetzt. Die Dicke der Haftschicht betrug 0,5 μm.

Darauf wurde nun die Magnetschichtdispersion aufgetragen. Dazu wurden 640 Teile einer 12,5%igen Lösung eines thermoplastischen Polyesterurethans aus Adipinsäure, Butandiol-1,4 und 4,4'-Diisocyanatodiphenylmethan in einem Gemisch aus gleichen Teilen Tetrahydrofuran und Dioxan sowie 100 Teile einer 20%igen Lösung eines Phenoxyharzes aus Bisphenol A und Epichlorhydrin im gleichen Lösungsmittelgemisch mit 900 Teilen eines cobaltmodifizierten Gamma-Eisen(III)oxids mit einer Koerzitivfeldstärke von 54 kA/m, 22,5 Teilen Natriumoleat und weiteren 600 Teilen des genannten Lösungsmittelgemisches in einer 6000 Volumenteile fassenden gefüllten Kugelmühle 4 Tage lang dispergiert. Anschliessend wurden nochmals 640 Teile der genannten Polyesterurethan-Lösung und 100 Teile der Phenoxyharzlösung sowie 18 Teile Butylstearat, 4,5 Teile Stearinsäure und 400 Teile des genannten Lösungsmittelgemisches zugegeben und nochmals 24 Stunden dispergiert. Die erhaltene Dispersion wurde unter Druck durch einen Filter mit 5 μm Poren filtriert und auf die mit der Haftschicht versehene Polyethylenterephthalatfolie mittels eines üblichen Linealgiessers aufgetragen. Die beschichtete Folie wurde nach Durchlaufen eines Magnetfeldes zur Ausrichtung der magnetischen Teilchen bei Temperaturen zwischen 60 und 80°C getrocknet. Nach der Trocknung wurde die Magnetschicht der beschichteten Folie durch zweimaliges Hindurchführen zwischen beheizten Walzen (90°C unter einem Liniendruck von 35 kg/cm) verdichtet und geglättet. Die Dicke der Magnetschicht betrug 4 μm. Zur Bestimmung der Haftvermittlung wurden Trennkraft und Schälwiderstand nach U. Zoll, Adhesion 1979, Heft 5, Seiten 128 bis 134, bestimmt. Die Messergebnisse sind in der Tabelle angegeben.

Vergleichsversuch A

Die in Beispiel 1 angegebene Magnetschichtdispersion wurde wie dort beschrieben direkt auf die Polyethylenterephthalatfolie aufgetragen. Die gemessenen Werte für Trennkraft und Schälwiderstand sind in der Tabelle angegeben.

Vergleichsversuch B

Auf die Polyethylenterephthalatfolie wurde mit einer Rasterwalze, wie in Beispiel 1, eine 5%ige Lösung eines Vinylidenchlorid-Acrylnitril-Polymeren in Tetrahydrofuran aufgetragen und wärmegetrocknet. Darauf wurde dann, wie in Beispiel 1 beschrieben, eine Magnetschichtdispersion aufgebracht. Die Messergebnisse sind in der Tabelle angegeben.

Beispiel 2

Es wurde wie in Beispiel 1 beschrieben vorgegangen, jedoch wurde folgende Magnetschichtdispersion aufgebracht.

50 Teile eines Chromdioxids mit einem Hc-Wert von 48 kA/m wurden zusammen 1,25 Teilen Zinkoleat, 71,1 Teilen einer 12,5%igen Polyurethan-Lösung in THF-Dioxan (1:1), 11 Teilen einer 20%igen Phenoxyharz-Lösung, 1,0 Teile Butylstearat, 0,25 Teilen Stearinsäure und 58,85 Teilen des Lösungsmittelgemisches THF-Dioxan (1:1) in eine Glasflasche mit einem Raumvolumen von 0,25 l und mit 0,43 kg Stahlkugeln (Durchmesser von 4 bis 6 mm) eingewogen. Die Glasflasche wurde anschliessend in eine Schüttelkugelmühle eingespannt und 3 Stunden geschüttelt. Danach wurde die Dispersion von den Kugeln durch Filtration getrennt und wie in Beispiel 1 beschrieben weiterverarbeitet. Die Messergebnisse sind in der Tabelle angegeben.

Vergleichsversuche C und D

Entsprechend den Vergleichsversuchen A und B wurden die Versuche mit der Magnetschichtdispersion gemäss Beispiel 1 durchgeführt. Die Messergebnisse sind in der Tabelle angegeben.

Tabelle

|  | Trenn-kraft [N] | Schäl-widerstand [N/cm] |
|---|---|---|
| Beispiel 1 | 3,05 | 1,75 |
| Vergl. Vers. A | 0,29 | 0,17 |
| Vergl. Vers. B | 0,60 | 0,42 |
| Beispiel 2 | 5,2 | 2,0 |
| Vergl. Vers. C | 0,34 | 0,15 |
| Vergl. Vers. D | 0,65 | 0,45 |

**Patentansprüche**

1. Verfahren zur Herstellung schichtförmiger magnetischer Aufzeichnungsträger durch Auftragen einer Zwischenschicht aus einem strahlenvernetzbaren wässrigen Polymeren auf ein flexibles Kunststoffträgermaterial, Trocknen der Zwischenschicht und anschliessendes Aufbringen einer Dispersion eines magnetisch anisotropen Materials in einer Bindemittellösung und Verfestigen der Magnetschicht, dadurch gekennzeichnet, dass die strahlungshärtbare wässrige Dispersion für die haftvermittelnde Zwischenschicht aus

(A) 20 bis 80 Gew.-% Wasser,

(B) 80 bis 20 Gw.-% mindestens eines in (A) dispergierten Präpolymeren mit einem Gehalt von 0,01 bis 1,0 Mol pro 100 g Präpolymer an polymerisierbaren C-C-Doppelbindungen, einem mittleren Molekulargewicht von mindestens 350 sowie einer Viskosität bei 23°C von mindestens 600 cP,

mit der Massgabe, dass die Summe der unter (A) und (B) genannten Prozentzahlen gleich 100 ist, sowie zusätzlich

(C) 0,1 bis 10 Gew.-%, bezogen auf (B), eines Polyvinylalkohols mit einem Restacetatgehalt von weniger als 35 Mol-% und/oder einem Vinylpyrrolidon-Vinylester-Copolymeren mit einem Vinylestergehalt von weniger als 35 Gew.-% und

(D) 0,5 bis 10 Gew.-%, bezogen auf die Summe (A) und (B) mindestens eines Photoinitiators

besteht und nach dem Trocknen der Schicht mit UV-Licht vernetzt wird.

2. Verfahren gemäss Anspruch 1, dadurch gekennzeichnet, dass die Komponente (B) ein polymerisierbare C-C-Doppelbindungen enthaltender Polyester mit einer Säurezahl von höchstens 10 ist.

3. Verfahren gemäss Anspruch 1, dadurch gekennzeichnet, dass die Komponente (B) ein polymerisierbare C-C-Doppelbindungen enthaltender Polyether ist.

4. Verfahren gemäss Anspruch 1, dadurch gekennzeichnet, dass die Komponente (B) ein hydroxylgruppenhaltiges Umsetzungsprodukt aus einem mindestens zwei Epoxidgruppen pro Molekül enthaltenden Polyepoxid mit mindestens einer $\alpha,\beta$-ethylenisch ungesättigten Carbonsäure ist.

5. Verfahren gemäss Anspruch 1, dadurch gekennzeichnet, dass die Komponente (B) ein gegebenenfalls Harnstoffgruppen enthaltendes Polyurethan(meth)acrylat ist.

6. Verfahren gemäss Anspruch 1, dadurch gekennzeichnet, dass die Komponente (B) ein polymerisierbare Doppelbindungen enthaltendes Polymeres ist, das durch Einführung von $\alpha$, $\beta$ ethylenisch ungesättigten Acylresten in Acrylatcopolymere erhalten wird.

7. Verfahren gemäss Anspruch 1, dadurch gekennzeichnet, dass die Komponente (B) ein thermoplastisches Polyurethanelastomeres mit end- oder seitenständigen (Meth)-Acrylesterdoppelbindungen mit einem Molekulargewicht zwischen 1000 und 70000 ist.

**Claims**

1. A process for the production of a layer-type magnetic recording medium by applying atop a flexible plastics base material an intermediate layer of radiation crosslinkable aqueous polymer, drying the intermediate layer and then applying a dispersion of a magnetically anisotropic material in a binder solution and solidifying the magnetic layer, wherein the radiation-curable aqueous dispersion for the adhesion-promoting intermediate layer consists of

(A) from 20 to 80% by weight of water and

(B) from 80 to 20% by weight of one or more prepolymers which are dispersed in (A), contain from 0.01 to 1.0 mole of polymerizable C-C double bonds per 100 g of prepolymer and have a mean molecular weight of not less than 350 and a viscosity of not less than 600 cP at 23°C,

with the proviso that the sum of the percentages stated under (A) and (B) is 100, and furthermore

(C) from 0.1 to 10% by weight, based on (B), of a polyvinyl alcohol having a residual acetate content of less than 35 mol% and/or a vinylpyrrolidone/vinyl ester copolymer having a vinyl ester content of less than 35% by weight and

(D) from 0.5 to 10% by weight, based on the sum of (A) and (B), of one or more photoinitiators,

and, after the layer has been dried crosslinking is effected with UV light.

2. A process as claimed in claim 1, wherein the component (B) is a polyester which contains polymerizable C-C double bonds and has an acid number of not more than 10.

3. A process as claimed in claim 1, wherein the component (B) is a polyether which contains polymerizable C-C double bonds.

4. A process as claimed in claim 1, wherein the component (B) is a hydroxyl-containing reaction product of a polyepoxide containing two or more epoxide groups per molecule with one or more α,β-ethylenically unsaturated carboxylic acids.

5. A process as claimed in claim 1, wherein the component (B) is a polyurethane (meth)acrylate which may or may not contain urea groups.

6. A process as claimed in claim 1, wherein the component (B) is a polymer which contains polymerizable double bonds and is obtained by introducing α,β-ethylenically unsaturated acyl radicals into acrylate copolymers.

7. A process as claimed in claim 1, wherein the component (B) is a thermoplastic polyurethane elastomer possessing terminal (meth)acrylate double bonds or (meth)-acrylate double bonds in side chains and having a molecular weight of from 1,000 to 70,000.

**Revendications**

1. Procédé de fabrication de support d'enregistrement magnétique sous forme de couche, par application d'une couche intermédiaire en polymère aqueux, réticulable par radiations, sur un matériau support en matière plastique flexible, séchage de la couche intermédiaire puis mise d'une dispersion d'un matériau anisotrope magnétique dans un solvant liant et durcissement de la couche magnétique, caractérisé par le fait que la dispersion aqueuse, durcissable par radiations, pour la ocuche intermédiaire assurant l'adhérence, est constituée de:

(A) 20 à 80% en poids d'eau

(B) 80 à 20% en poids d'au moins un prépolymère dispersé dans (A), d'une teneur de 0,01 à 1,0 mole par 100 g de prépolymère à doubles liaisons C-C polymérisables, d'un poids moléculaire moyen d'au moins 350 et d'une viscosité, à 23°C, d'au moins 600 cP,

sous réserve que la somme des pourcentages indiqués sous (A) et (B) soit égale à 100, ainsi qu'en outre,

(C) 0,1 à 10% en poids, rapporté à (B), d'un alcool polyvinylique à teneur en acétate de reste inférieure à 35 moles% et/où d'un copolymère vinylpyrrolidone-vinylester à teneur en ester vinylique inférieure à 35% en poids,

(D) 0,5 à 10% en poids, rapporté à la somme de (A) et (B) d'au moins un photoinitiateur

et qu'après séchage de la couche, elle est réticulée par de la lumière UV.

2. Procédé selon la revendication 1, caractérisé par le fait que le composant (B) est un polyester contenant des doubles liaisons C-C polymérisables, d'un indice d'acide d'au plus 10.

3. Procédé selon la revendication 1, caractérisé par le fait que le composant (B) est un polyéther contenant des doubles liaisons C-C polymérisables.

4. Procédé selon la revendication 1, caractérisé par le fait que le composant (B) est un produit de réaction à groupes hydroxyle d'au moins un polyépoxyde contenant au moins deux groupes époxyde par molécule avec au moins un acide carboxylique insaturé éthyléniquement en α,β.

5. Procédé selon la revendication 1, caractérisé par le fait que le composant (B) est un (méth)acrylate de polyuréthane contenant éventuellement des groupes urée.

6. Procédé selon la revendication 1, caractérisé par le fait que le composant (B) est un polymère contenant des doubles liaisons polymérisables, qui est obtenu en introduisant des restes acyle insaturés éthyléniquement en α,β, dans les copolymères d'acrylate.

7. Procédé selon la revendication 1, caractérisé par le fait que le composant (B) est un élastomère de polyuréthane, thermoplastique, à doubles liaisons d'ester (méth)acrylique, d'extrémités ou latérales, d'un poids moléculaire compris entre 1000 et 70000.